(19) Europäisches Patentamt
European Patent Office
Office européen des brevets

(11) **EP 4 429 338 A1**

(12) **EUROPEAN PATENT APPLICATION**
published in accordance with Art. 153(4) EPC

(43) Date of publication:
**11.09.2024 Bulletin 2024/37**

(21) Application number: **22890437.1**

(22) Date of filing: **04.11.2022**

(51) International Patent Classification (IPC):
**H04W 56/00** (2009.01)   **H04W 72/04** (2023.01)

(52) Cooperative Patent Classification (CPC):
**H04W 56/00; H04W 72/04**

(86) International application number:
**PCT/KR2022/017217**

(87) International publication number:
**WO 2023/080706 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2021 KR 20210150318**

(71) Applicant: **LG Electronics Inc.**
**Yeongdeungpo-gu**
**Seoul 07336 (KR)**

(72) Inventors:
• **GO, Seongwon**
**Seoul 06772 (KR)**

• **KIM, Kyuseok**
**Seoul 06772 (KR)**
• **KANG, Jiwon**
**Seoul 06772 (KR)**
• **PARK, Haewook**
**Seoul 06772 (KR)**
• **JEONG, Chanho**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR UPLINK TRANSMISSION AND RECEPTION IN WIRELESS COMMUNICATION SYSTEM**

(57)    A method and a device for uplink transmission and reception in a wireless communication system are disclosed. A method for performing uplink transmission according to an embodiment of the present disclosure may comprise the steps of: receiving setting information related to a serving cell from a base station, wherein the setting information comprises information on a plurality of timing advance groups (TAGs) associated with the serving cell; receiving, from the base station, control information comprising a timing advance (TA) command for each TAG in the plurality of TAGs; and performing the uplink transmission to the base station in the serving cell. On the basis of the uplink transmission being associated with a specific TAG among the plurality of TAGs, transmission timing of the uplink transmission may be determined on the basis of a TA command for the specific TAG.

FIG. 13

Receive configuration information related to a serving cell — S1301

Receive control information including a timing advance command — S1302

Perform uplink transmission — S1303

**Description**

[Technical Field]

The present disclosure relates to a wireless communication system, and in more detail, relates to a method and an apparatus of transmitting and receiving uplink in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus of transmitting and receiving an uplink signal/channel.

In addition, an additional technical object of the present disclosure is to provide a method and apparatus for configuring a plurality of timing advance groups for one or more cells or cell groups for multiple transmission reception point (TRP) transmission.

The technical objects to be achieved by the present disclosure are not limited to the above-described technical objects, and other technical objects which are not described herein will be clearly understood by those skilled in the pertinent art from the following description.

[Technical Solution]

A method of performing uplink transmission in a wireless communication system according to an aspect of the present disclosure may include: receiving, from the base station, configuration information related to a serving cell, wherein the configuration information includes information on a plurality of timing advance groups (TAGs) related to the serving cell; receiving, from the base station, control information including a timing advance (TA) command for each TAG in the plurality of TAGs; and performing, to the base station, the uplink transmission in the serving cell. Based on the uplink transmission being related to a specific TAG among the plurality of TAGs, transmission timing of the uplink transmission may be determined based on a TA command for the specific TAG.

A method of receiving uplink transmission according to an additional aspect of the present disclosure may include: transmitting, to a user equipment (UE), configuration information related to a serving cell, wherein the configuration information includes information on a plurality of timing advance groups (TAGs) related to the serving cell; transmitting, to the UE, control information including a timing advance (TA) command for each TAG in the plurality of TAGs; and receiving, from the UE, the uplink transmission in the serving cell. Based on the uplink transmission being related to a specific TAG among the plurality of TAGs, transmission timing of the uplink transmission may be determined based on a TA command for the specific TAG.

[Technical Effects]

According to an embodiment of the present disclosure, in multiple TRPs, as a plurality of timing advance groups are configured for one or more cells or cell groups for transmission, uplink transmission and reception can be performed by applying a TRP-specific timing advance value.

In addition, according to an embodiment of the present disclosure, in multiple TRPs, uplink transmission and reception for multiple TRPs can be performed smoothly even when distances between a TRP and a UE are significantly different for each TRP.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram illustrating an uplink-downlink timing relationship in a wireless communication system to which the present disclosure can be applied.
FIG. 8 illustrates a MAC CE for random access response in a wireless communication system to which the present disclosure can be applied.
FIG. 9 illustrates a timing advance command MAC CE in a wireless communication system to which the present disclosure can be applied.
FIG. 10 is a diagram illustrating a plurality of TAGs according to an embodiment of the present disclosure.
FIG. 11 is a diagram illustrating a sub-TAG according to an embodiment of the present disclosure.
FIG. 12 illustrates a signaling method for an uplink transmission and reception method according to an embodiment of the present disclosure.
FIG. 13 is a diagram illustrating an operation of a UE for an uplink transmission and reception method according to an embodiment of the present disclosure.
FIG. 14 is a diagram illustrating an operation of a base station for an uplink transmission and reception method according to an embodiment of the present disclosure.
FIG. 15 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition,"/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal

- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

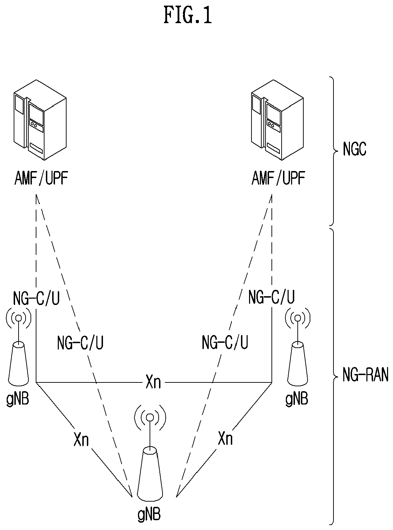

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

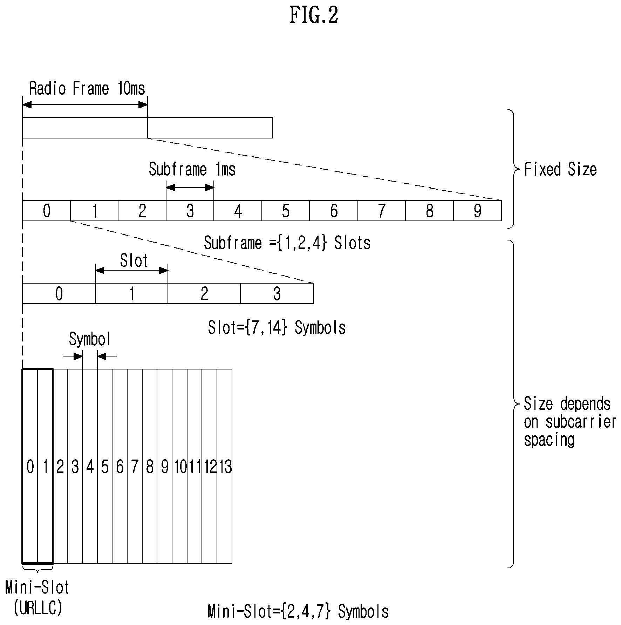

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot Nf)$. Here, $\Delta f_{max}$ is 480·103 Hz and $N_f$ is 4096. Downlink and uplink transmission is configured (organized) with a radio frame having a duration of $Tf = 1/(\Delta f_{max} Nf/100) \cdot T_c = 140ms$. Here, a radio frame is configured with 10 subframes having a duration of $T_{sf} = (\Delta f_{max} Nf/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

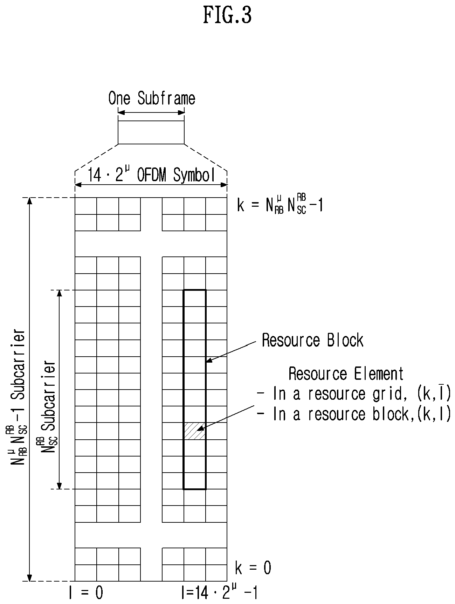

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14\cdot2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^N N_{sc}^{RB}$ subcarriers. Here, $N_{RB}^N \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, k=0,..., $N_{RB}^{\mu}N_{sc}^{RB}$-1 is an index in a frequency domain and l'=0,..., $2^{\mu}N_{symb}^{(\mu)}$-1 refers to a position of a symbol in a subframe. When referring to a resource element in a slot, an index pair (k,l) is used. Here, l=0,..., $N_{symb}^{\mu}$-1. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWp,i}^{start,\mu}$ is a common resource block that a BWP starts relatively to common resource block 0.

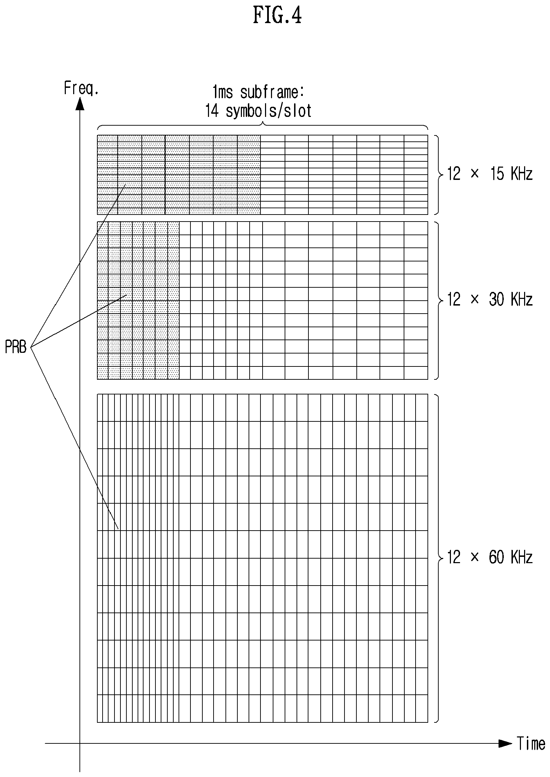

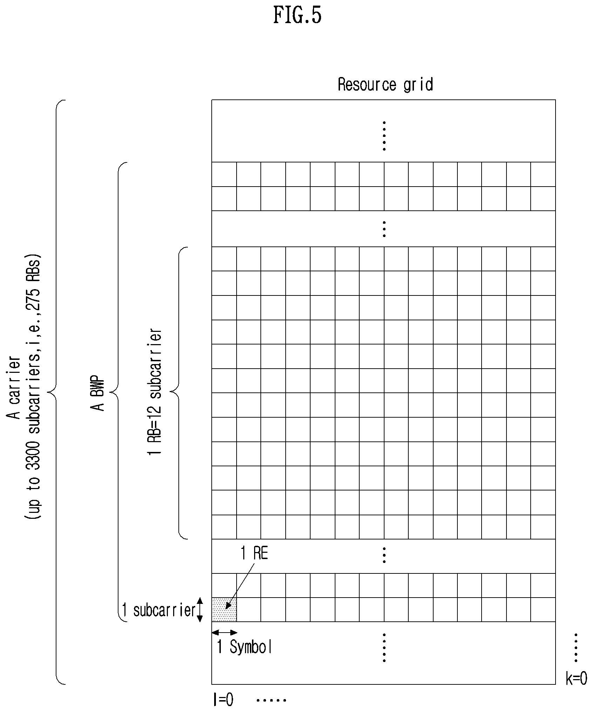

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

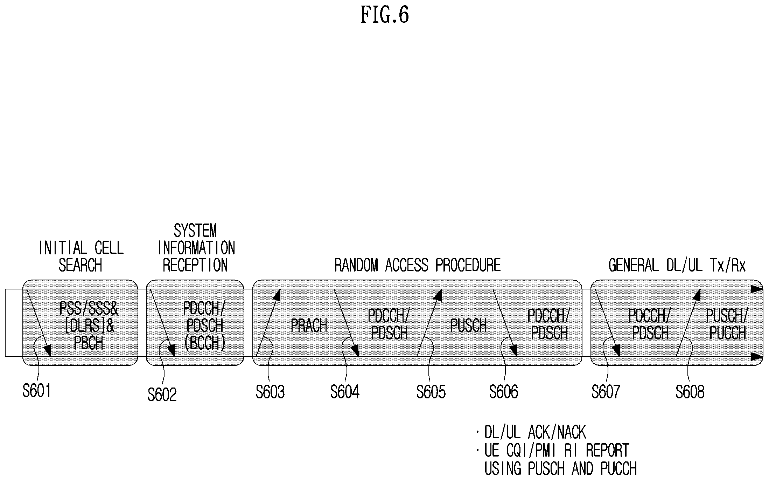

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Timing advance (TA) related operations

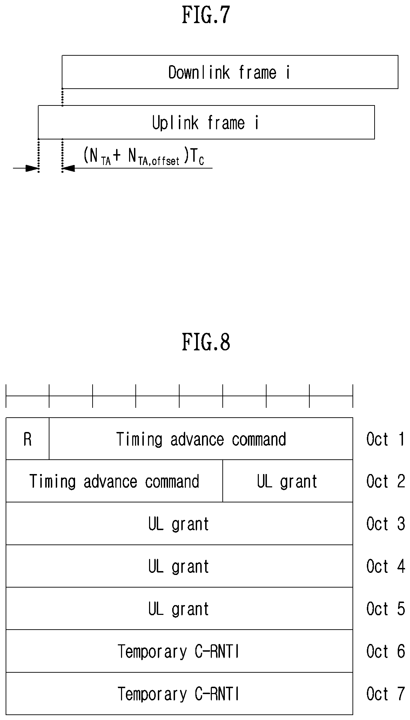

FIG. 7 is a diagram illustrating an uplink-downlink timing relationship in a wireless communication system to which the present disclosure can be applied.

An uplink frame number i for transmission from a UE starts $T_{TA}=(N_{TA}+N_{TA,offset})T_c$ before a start of a corresponding downlink frame (i.e., downlink frame i) in the UE. That is, an uplink frame starts $T_{TA}$ before a corresponding downlink frame. Here, $N_{TA,offset}$ is given in TS 38.213, except for msgA transmission on a PUCH (in this case, $N_{TA}=0$).

Hereinafter, a $N_{TA}$ configuration method will be described.

$N_{TA}$ may be configured through i) a random access response (RAR), or ii) a timing advance command MAC control element (CE).

Case 1: Configuration method through RAR

A timing advance command indicates $N_{TA}$ values with index values of $T_A=0, 2, ..., 3846$ in the case of a random access response or an absolute timing advance command MAC CE ($T_A$) for a timing advance group (TAG). Here, an amount of time alignment for a TAG with SCS of $2^\mu \cdot 15$ kHz is $N_{TA}=T_A \cdot 16 \cdot 64/2^\mu$. $N_{TA}$ is relative to SCS of the first uplink transmission from a UE after receipt of a random access response or an absolute timing advance command MAC CE.

FIG. 8 illustrates a MAC CE for random access response in a wireless communication system to which the present disclosure can be applied.

A MAC CE (hereinafter MAC RAR) for a random access response has a fixed size as shown in FIG. 8 and includes the following fields.

- R: Reserved bit, set to 0;
- Timing advance command: The Timing Advance Command field indicates an index value $T_A$ used to control an amount of timing adjustment that a MAC entity should apply. A size of the Timing Advance Command field is 12 bits.
- UL Grant: The Uplink Grant field indicates resources to be used for uplink. A size of the UL Grant field is 27 bits.
- Temporary C-RNTI (Temporary C-RNTI): The Temporary C-RNTI field is a temporary identifier used by a MAC entity during random access. A size of the Temporary C-RNTI field is 16 bits.

Case 2: Configuration method through timing advance command (MAC-CE)

A timing advance command ($T_A$) for a TAG indicates an adjustment of the current $N_{TA}$ value (i.e., $N_{TA\_old}$) to a new NTA value (i.e., $N_{TA-new}$) with index values of TA=0,1,2,...,63. Here, in the case of SCS of $2^\mu \cdot 15$ kHz, $N_{TA\_new}=N_{TA\_old}+(T_A-31) \cdot 16 \cdot 64/2^\mu$.

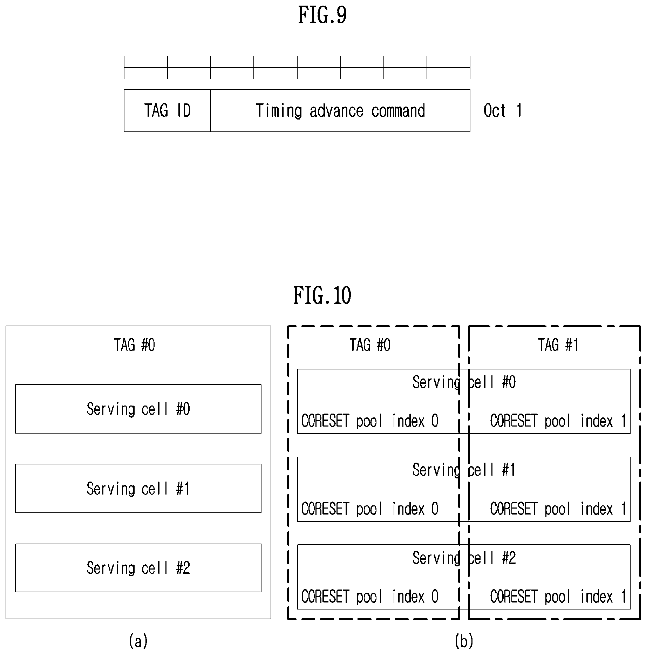

FIG. 9 illustrates a timing advance command MAC CE in a wireless communication system to which the present disclosure can be applied.

A timing advance command MAC CE is identified by a MAC subheader having a logical channel identifier (LCID). A timing advance command MAC CE has a fixed size and composed of 1 octet as follows.

- TAG ID (TAG Identity): This field indicates a TAH identifier of an addressed TAG. A TAG containing SpCell has TAG identifier 0. A length of this field is 2 bits.
- Timing advance command: This field indicates an index value $T_A$ used to control an amount of timing adjustment that a MAC entity should apply. A length of the timing advance command field is 6 bits.

The present disclosure primarily illustrates and describes a 4-step random access procedure (i.e., the RACH procedure), however a 2-step random access procedure is not excluded, therefore the present disclosure can be equally applied to the 2-step random access procedure.

Hereinafter, a method for configuring NTA,offset will be described.

Case 1: Method for configuring a specific value for each serving cell

An information element (IE) for serving cell common configuration (e.g., ServingCellConfigCommon) is used to configure cell-specific parameters of a serving cell of a UE. When a UE accesses a cell from an idle state, the corresponding IE includes parameters that can generally be obtained from an SSB, a master information block (MIB), or SIBs. With this IE, a network provides a UE with information in dedicated signaling when configuring secondary cells (SCells) or additional secondary cell groups (SCGs). Additionally, a network provides a UE with special cells (SpCell) (master cell group (MCG) and SCG) when re-establishing synchronization.

Table 6 illustrates ServingCellConfigCommon IE.

【Table 6】

```
ServingCellConfigCommon ::=         SEQUENCE {
    physCellId                      PhysCellId
    OPTIONAL,    -- Cond HOAndServCellAdd,
    downlinkConfigCommon                    DownlinkConfigCommon
    OPTIONAL,    -- Cond HOAndServCellAdd
    uplinkConfigCommon                      UplinkConfigCommon
    OPTIONAL,    -- Need M
    supplementaryUplinkConfig               UplinkConfigCommon
    OPTIONAL,    -- Need S
```

```
    n-TimingAdvanceOffset            ENUMERATED { n0, n25600, n39936 }
OPTIONAL,   -- Need S
ssb-PositionsInBurst             CHOICE {
    shortBitmap                  BIT STRING (SIZE (4)),
    mediumBitmap                  BIT STRING (SIZE (8)),
    longBitmap                   BIT STRING (SIZE (64))
}
OPTIONAL, -- Cond AbsFreqSSB
ssb-periodicityServingCell       ENUMERATED { ms5, ms10, ms20, ms40,
ms80, ms160, spare2, spare1 }   OPTIONAL, -- Need S
dmrs-TypeA-Position              ENUMERATED {pos2, pos3},
lte-CRS-ToMatchAround             SetupRelease { RateMatchPatternLTE-CRS }
OPTIONAL, -- Need M
rateMatchPatternToAddModList      SEQUENCE (SIZE
(1..maxNrofRateMatchPatterns)) OF RateMatchPattern   OPTIONAL, -- Need N
rateMatchPatternToReleaseList     SEQUENCE (SIZE
(1..maxNrofRateMatchPatterns)) OF RateMatchPatternId OPTIONAL, -- Need N
ssbSubcarrierSpacing             SubcarrierSpacing
OPTIONAL, -- Cond HOAndServCellWithSSB
tdd-UL-DL-ConfigurationCommon      TDD-UL-DL-ConfigCommon
OPTIONAL, -- Cond TDD
ss-PBCH-BlockPower               INTEGER (-60..50),
...,
[[
channelAccessMode-r16             CHOICE {
    dynamic                      NULL,
    semiStatic                   SemiStaticChannelAccessConfig-r16
}
OPTIONAL, -- Cond SharedSpectrum
discoveryBurstWindowLength-r16        ENUMERATED {ms0dot5, ms1, ms2,
ms3, ms4, ms5}               OPTIONAL, -- Need R
ssb-PositionQCL-r16               SSB-PositionQCL-Relation-r16
OPTIONAL, -- Cond SharedSpectrum
highSpeedConfig-r16               HighSpeedConfig-r16
OPTIONAL  -- Need R
]],
[[
```

```
    highSpeedConfig-v1700              HighSpeedConfig-v1700
    OPTIONAL, -- Need R
    channelAccessMode2-r17             ENUMERATED {enabled}
    OPTIONAL, -- Cond SharedSpectrum2
    discoveryBurstWindowLength-r17      ENUMERATED {ms0dot125, ms0dot25,
    ms0dot5, ms0dot75, ms1, ms1dot25}  OPTIONAL, -- Need R
    ssb-PositionQCL-r17                SSB-PositionQCL-Relation-r17
    OPTIONAL, -- Cond SharedSpectrum2
    highSpeedConfigFR2-r17             HighSpeedConfigFR2-r17
    OPTIONAL, -- Need R
    uplinkConfigCommon-v1700           UplinkConfigCommon-v1700
    OPTIONAL, -- Need R
    ntn-Config-r17                     NTN-Config-r17
    OPTIONAL  -- Need R
    ]],
    [[
    featurePriorities-r17              SEQUENCE {
        redCapPriority-r17                 FeaturePriority-r17
    OPTIONAL, -- Need R
        slicingPriority-r17                FeaturePriority-r17
    OPTIONAL, -- Need R
        msg3-Repetitions-Priority-r17      FeaturePriority-r17
    OPTIONAL, -- Need R
        sdt-Priority-r17                   FeaturePriority-r17
    OPTIONAL  -- Need R
    }
    OPTIONAL  -- Need R
    ]]
}
```

Referring to table 6, the n-TimingAdvanceOffset field (or parameter) indicates $N_{TA,offset}$ to be applied to all uplink transmissions on a corresponding serving cell. If this field does not exist, a UE applies a value defined for a duplex mode and frequency range (FR) of a corresponding serving cell.

Case 2: Method of applying a predefined value to a serving cell according to a duplex mode and a frequency range (FR)

Table 7 illustrates a value of $N_{TA,offset}$.

[Table 7]

| Frequency range and band of cell used for uplink transmission | $N_{TAoffset}$ (Unit: Tc) |
|---|---|
| FR1 FDD or TDD band with neither E-UTRA-NR nor NB-IoT-NR coexistence case | 25600 (Note 1) |
| FR1 FDD band with E-UTRA-NR and/or NB-IoT-NR coexistence case | 0 (Note 1) |
| FR1 TDD band with E-UTRA-NR and/or NB-IoT-NR coexistence case | 39936 (Note 1) |
| FR2 | 13792 |
| Note 1: The UE identifies $N_{TA\,offset}$ based on the information n-TimingAdvanceOffset as specified in TS 38.331 [2]. If UE is not provided with the information n-TimingAdvanceOffset, the default value of $N_{TA\,offset}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{TA\,offset}$ can also be provided for a FDD serving cell. Note 2: Void | |

Referring to Table 7, a value of $N_{TA,offset}$ is determined according to a frequency range (FR) and a band of a cell used for uplink transmission. In the case of neither E-UTRA-NR coexistence nor NB-IoT-NR coexistence, in an FR1 FDD or TDD band, a value of $N_{TA,offset}$ is 25600. In the case of E-UTRA-NR and/or NB-IoT-NR coexistence, in an FR1 FDD band, a value of $N_{TA,offset}$ is 0. In the case of E-UTRA-NR and/or NB-IoT-NR coexistence, in an FR1 TDD band, a value of $N_{TA,offset}$ is 39936. If FR2, a value of $N_{TA,offset}$ is 13792.

As described above, a UE identifies a value of $N_{TA,offset}$ based on the n-TimingAdvanceOffset field (or parameter) information. However, if a UE does not receive n-TimingAdvanceOffset field (or parameter) information, a default value of $N_{TA,offset}$ is configured to 25600 for an FR1 band. In the case of multiple UL carriers within the same timing advance group (TAG), a UE expects the same n-TimingAdvanceOffset value for all UL carriers, and the 39936 value of $N_{TA,offset}$ may also be provided for an FDD serving cell.

Hereinafter, a timing advance group (TAG) will be described.

For cells configured by RRC and also configured with UL, a TAG refers to a serving cell group using the same timing reference cell and the same timing advance value. A TAG including an SpCell of a MAC entity is referred to as a primary timing advance group (PTAG), while a secondary timing advance group (STAG) refers to other TAGs.

An IE (e.g., TAG-Config) for TAG configuration is used to configure parameters for a time-alignment group.

Table 8 illustrates the TAG-Config IE.

【Table 8】

| TAG-Config ::=                SEQUENCE { |
|---|

```
    tag-ToReleaseList              SEQUENCE (SIZE (1..maxNrofTAGs)) OF TAG-
    Id                  OPTIONAL,   -- Need N
    tag-ToAddModList               SEQUENCE (SIZE (1..maxNrofTAGs)) OF TAG
    OPTIONAL   -- Need N
}


TAG ::=                     SEQUENCE {
    tag-Id                  TAG-Id,
    timeAlignmentTimer              TimeAlignmentTimer,
    ...
}


TAG-Id ::=                  INTEGER (0..maxNrofTAGs-1)
```

Referring to Table 8, the tag-Id field (parameter) indicates a TAG of an SpCell or an SCell. This field uniquely identifies a TAG within a scope of a cell group.

Additionally, the timeAlignmentTimer field (parameter) indicates a time alignment timer value ([ms]) for a TAG with tag-Id.

A maximum number of TAGs may be determined by the standard or by a base station, and may be, for example, 4.

An IE (e.g., MAC-CellGroupConfig) for a MAC cell group configuration is used to configure MAC parameters for a cell group, including discontinuous reception (DRX).

Table 9 illustrates part of MAC-CellGroupConfig IE.

【Table 9】

```
MAC-CellGroupConfig ::=            SEQUENCE {
    drx-Config                  SetupRelease { DRX-Config }
    OPTIONAL,   -- Need M
    schedulingRequestConfig            SchedulingRequestConfig
    OPTIONAL,   -- Need M
    bsr-Config                  BSR-Config
    OPTIONAL,   -- Need M
    tag-Config                  TAG-Config
    OPTIONAL,   -- Need M
    phr-Config                  SetupRelease { PHR-Config }
    OPTIONAL,   -- Need M
    skipUplinkTxDynamic            BOOLEAN,
    ...,
```

```
[[
csi-Mask                     BOOLEAN
OPTIONAL,   -- Need M
dataInactivityTimer              SetupRelease { DataInactivityTimer }
OPTIONAL    -- Cond MCG-Only
]],
[[
usePreBSR-r16                ENUMERATED {true}
OPTIONAL,   -- Need R
schedulingRequestID-LBT-SCell-r16   SchedulingRequestId
OPTIONAL,   -- Need R
lch-BasedPrioritization-r16       ENUMERATED {enabled}
OPTIONAL,   -- Need R
schedulingRequestID-BFR-SCell-r16   SchedulingRequestId
OPTIONAL,   -- Need R
drx-ConfigSecondaryGroup-r16       SetupRelease { DRX-
ConfigSecondaryGroup-r16 }              OPTIONAL   -- Need M
]],
[[
enhancedSkipUplinkTxDynamic-r16    ENUMERATED {true}
OPTIONAL,   -- Need R
enhancedSkipUplinkTxConfigured-r16  ENUMERATED {true}
OPTIONAL    -- Need R
]],
[[
intraCG-Prioritization-r17        ENUMERATED {enabled}
OPTIONAL,    -- Cond LCH-PrioWithReTxTimer
drx-ConfigSL-r17                SetupRelease { DRX-ConfigSL-r17 }
OPTIONAL,   -- Need M
drx-ConfigExt-v1700               SetupRelease { DRX-ConfigExt-v1700 }
OPTIONAL,   -- Need M
schedulingRequestID-BFR-r17        SchedulingRequestId
OPTIONAL,   -- Need R
schedulingRequestID-BFR2-r17        SchedulingRequestId
OPTIONAL,   -- Need R
schedulingRequestConfig-v1700        SchedulingRequestConfig-v1700
OPTIONAL,   -- Need M
```

```
tar-Config-r17                    SetupRelease { TAR-Config-r17 }
OPTIONAL,   -- Need M
g-RNTI-ConfigToAddModList-r17       SEQUENCE (SIZE (1..maxG-RNTI-r17))
OF MBS-RNTI-SpecificConfig-r17     OPTIONAL,   -- Need N
g-RNTI-ConfigToReleaseList-r17      SEQUENCE (SIZE (1..maxG-RNTI-r17)) OF
MBS-RNTI-SpecificConfigId-r17    OPTIONAL,   -- Need N
g-CS-RNTI-ConfigToAddModList-r17    SEQUENCE (SIZE (1..maxG-CS-RNTI-
r17)) OF MBS-RNTI-SpecificConfig-r17    OPTIONAL,   -- Need N
g-CS-RNTI-ConfigToReleaseList-r17   SEQUENCE (SIZE (1..maxG-CS-RNTI-
r17)) OF MBS-RNTI-SpecificConfigId-r17  OPTIONAL,   -- Need N
allowCSI-SRS-Tx-MulticastDRX-Active-r17   BOOLEAN
OPTIONAL    -- Need M
]],
[[
schedulingRequestID-PosMG-Request-r17 SchedulingRequestId
OPTIONAL,   -- Need R
drx-LastTransmissionUL-r17          ENUMERATED {enabled}
OPTIONAL    -- Need R
]]
}
```

Referring to Table 9, the TAG-Config IE can be configured through the tag-Config field in the MAC-CellGroup-Config IE.

An IE (e.g., CellGroupConfig) for configuring a cell group is used to configure a master cell group (MCG) or a secondary cell group (SCG). A cell group is associated with one MAC entity, Radio Link Control (RLC) entities and includes a set of logical channels of a primary cell (SpCell) and one or more secondary cells (SCells).

Table 10 illustrates part of CellGroupConfig IE.

【Table 10】

```
CellGroupConfig ::=               SEQUENCE {
  cellGroupId                     CellGroupId,
  rlc-BearerToAddModList            SEQUENCE (SIZE(1..maxLC-ID)) OF
  RLC-BearerConfig                OPTIONAL,   -- Need N
  rlc-BearerToReleaseList           SEQUENCE (SIZE(1..maxLC-ID)) OF
  LogicalChannelIdentity          OPTIONAL,   -- Need N
  mac-CellGroupConfig               MAC-CellGroupConfig
  OPTIONAL,   -- Need M
```

```
physicalCellGroupConfig          PhysicalCellGroupConfig
OPTIONAL,   -- Need M
spCellConfig                     SpCellConfig
OPTIONAL,   -- Need M
sCellToAddModList                        SEQUENCE (SIZE (1..maxNrofSCells)) OF
SCellConfig            OPTIONAL,   -- Need N
sCellToReleaseList                       SEQUENCE (SIZE (1..maxNrofSCells)) OF
SCellIndex             OPTIONAL,   -- Need N

...,
```

Referring to Table 10, the MAC-CellGroupConfig IE can be confiugred through the mac-CellGroupConfig field in CellGroupConfig IE.

A maximum number of secondary cell groups may be determined by the standard or by a base station, and may be, for example, 3.

Method for configuring multiple TAGs or sub-TAGs

According to the current standard, different TA commands are possible for each timing advance group (TAG). A TAG may correspond to one or more cell groups, so the same TA command can be applied to all serving cells (s) in the cell group(s) corresponding to a specific TAG.

Meanwhile, when considering multi-TRP (multi-TRP) transmission introduced in Rel-16/17, an appropriate TA may have different values for each TRP (panel) - UE (panel) pair. For example, TA1 may be required for TRP1-UE, TA2 may be required for TRP2-UE, and TA1 and TA2 may have different values. The difference in TA as described above may occur, for example, when a distance between TRP-UE is relatively large. For example, when a distance (Dist1) between TRP1 and a UE is significantly larger than a distance (Dist2) between TRP2 and a UE (Dist1 > > Dist2), TA1 may also be significantly larger than TA2 (TA1 >> TA2).

In the Rel-16/17 standard, multi-TRP transmission can be supported as follows. Different TRPs can be distinguished based on a CORESET pool index (CORESETPoolindex), a TCI state, a SRS resource indicator (SRI), spatial relation information (SpatialRelationInfo), a pathloss reference RS (Path loss Reference RS) (or PL RS: pathloss reference signal), etc.

Meanwhile, the different TRPs may be included in the same cell group and, therefore, may be included in the same TAG. Therefore, even when different TA values are required for each TRP, according to the current standard, only the same TA value can be applied within a TAG, so TA values for each TRP cannot be supported.

In order to compensate for the above shortcomings, the present disclosure proposes a method for supporting different TA values for each TRP even within the same TAG.

In this disclosure, the description as a TRP is for convenience of explanation, and may also be interpreted as terms such as a panel/beam. That is, the methods proposed in this disclosure can be applied/interpreted by replacing a TRP with a panel/beam.

In the present disclosure, L1 (layer 1) signaling may mean DCI-based dynamic signaling between a base station and a UE, and L2 (Layer 2) signaling may refer to higher layer signaling based on an RRC/MAC control element (CE) between a base station and a UE.

The method proposed in this disclosure can be applied/supported independently and/or in a form of a combination of one or more multiple proposed methods.

Embodiment 1: Method for configuring/indicating/defining a TAG that can perform an independent TA procedure while referring to a specific TAG

The'referring to a specific TAG' may mean that a TA value corresponding to a specific TAG can be used as a base/reference value. For example, when referring to TAG1, an independent TA procedure may be performed in a form of "new TA = TA1 + offset" based on TA1 corresponding to TAG1.

The 'performing an independent TA procedure' means that a TA value different from a TA corresponding to a specific TAG may be configured/indicated/defined, and a base station/UE may transmit a DL/UL signal based on a differential TA value.

In the above proposal, 'TAG in which an independent TA procedure can be performed while referring to a specific TAG' can be named as sub-TAG. Here, a sub-TAG may be referred to by another term as it is not intended to limit the proposal of the present disclosure. And/or, it may be interpreted that a plurality of TAGs are defined based on the method proposed in this disclosure. And/or, a method of supporting sub-TAG by expanding the number of TAG-ID (identity) may be applied.

In other words, for convenience of explanation, the present disclosure focuses on how sub-TAGs within one TAG are configured, but sub-TAGs may be interpreted as multiple TAGs. That is, multiple TAGs can be configured for a specific cell or a specific cell group, and an independent TA value can be configured/applied for each TAG. In the present disclosure, a plurality of TAGs may mean a plurality of TAGs related to a specific cell or a specific cell group. Here, the plurality of TAGs configured for a specific cell or a specific cell group may or may not include the same cell(s) or the same cell group(s). For example, it is assumed that cell 1 (or cell group 1), cell 2 (or cell group 2), cell 3 (or cell group 3), cell 4 (or cell group 4), cell 5 (or cell group 5), TAG 1, TAG 2, and TAG 3 are configured. Here, cell 1 (or cell group 1), cell 2 (or cell group 2), and cell 3 (or cell group 3) may correspond to TAG 1, cell 2 (or cell group 2), cell 3 (or cell group 3), and cell 4 (or cell group 4) may correspond to TAG 2, and cell 4 (or cell group 4) and cell 5 (or cell group 5) may correspond to TAG 3. In other words, cell 1 (or cell group 1) may correspond only to TAG 1, cell 2 (or cell group 2) and cell 3 (or cell group 3) may correspond to TAG 1 and TAG 2, cell 4 (or cell group 4) may correspond to TAG 2 and TAG 3, and cell 5 (or cell group 5) may only correspond to TAG 3.

Hereinafter, for convenience of explanation, a method in which sub-TAGs within one TAG are configured is described in this disclosure. Based on the above proposal, for a specific TAG, sub-TAGs that can be configured/indicated/defined different TA values within a TAG can be configured/ indicated/defined. As described above, when a sub-TAG is interpreted as a plurality of TAGs, different TA values may be configured/indicated/defined for each of the plurality of TAGs configured per cell or per cell group.

Based on Embodiment 1 above, when configuring/indicating/defining a sub-TAG, a UE/base station can perform an independent TA operation based on different TA values for each sub-TAG. And/or an operation related to a timer (e.g., TimeAlignmentTimer) for time alignment within the TAG may be configured/indicated/defined to equally perform/assume an operation corresponding to the TAG for all sub-TAGs within the TAG.

Table 11 illustrates the operations defined in the current standard TS 38.321 Section 5.2.

[Table 11]

| |
|---|
| 5.2 Maintenance of Uplink Time Alignment |
| RRC configures the following parameters for the maintenance of UL time alignment: |
| RRC configures the following parameters for the maintenance of UL time alignment: |
| - timeAlignmentTimer (per TAG) which controls how long the MAC entity considers the Serving Cells belonging to the associated TAG to be uplink time aligned. The MAC entity shall: |
| 1> when a Timing Advance Command MAC CE is received, and if an $N_{TA}$ has been maintained with the indicated TAG: |
| 2> apply the Timing Advance Command for the indicated TAG; |
| 2> start or restart the timeAlignmentTimer associated with the indicated TAG. |
| 1> when a Timing Advance Command is received in a Random Access Response message for a Serving Cell belonging to a TAG or in a MSGB for an SpCell: |
| 2> if the Random Access Preamble was not selected by the MAC entity among the contention-based Random Access Preamble: |
| 3> apply the Timing Advance Command for this TAG; |
| 3> start or restart the timeAlignmentTimer associated with this TAG. |
| 2> else if the timeAlignmentTimer associated with this TAG is not running: |
| 3> apply the Timing Advance Command for this TAG; |
| 3> start the timeAlignmentTimer associated with this TAG; |
| 3> when the Contention Resolution is considered not successful; or |
| 3> when the Contention Resolution is considered successful for SI request, after transmitting HARQ feedback for MAC PDU including UE Contention Resolution Identity MAC CE: |
| 4> stop timeAlignmentTimer associated with this TAG. |
| 2> else: |
| 3> ignore the received Timing Advance Command. |
| 1> when an Absolute Timing Advance Command is received in response to a MSGA transmission including C-RNTI MAC CE: |
| 2> apply the Timing Advance Command for PTAG; |

(continued)

| |
|---|
| 2> start or restart the timeAlignmentTimer associated with PTAG. |
| 1> when a timeAlignmentTimer expires: |
| 2> if the timeAlignmentTimer is associated with the PTAG: |
| 3> flush all HARQ buffers for all Serving Cells; |
| 3> notify RRC to release PUCCH for all Serving Cells, if configured; |
| 3> notify RRC to release SRS for all Serving Cells, if configured; |
| 3> clear any configured downlink assignments and configured uplink grants; |
| 3> clear any PUSCH resource for semi-persistent CSI reporting; |
| 3> consider all running timeAlignmentTimers as expired; |
| 3> maintain $N_{TA}$ of all TAGs. |
| 2> else if the timeAlignmentTimer is associated with an STAG, then for all Serving Cells belonging to this TAG: |
| 3> flush all HARQ buffers; |
| 3> notify RRC to release PUCCH, if configured; |
| 3> notify RRC to release SRS, if configured; |
| 3> clear any configured downlink assignments and configured uplink grants; |
| 3> clear any PUSCH resource for semi-persistent CSI reporting; |
| 3> maintain $N_{TA}$ of this TAG. |
| When the MAC entity stops uplink transmissions for an SCell due to the fact that the maximum uplink transmission timing difference between TAGs of the MAC entity or the maximum uplink transmission timing difference between TAGs of any MAC entity of the UE is exceeded, the MAC entity considers the timeAlignmentTimer associated with the SCell as expired. |
| The MAC entity shall not perform any uplink transmission on a Serving Cell except the Random Access Preamble and MSGA transmission when the timeAlignmentTimer associated with the TAG to which this Serving Cell belongs is not running. Furthermore, when the timeAlignmentTimer associated with the PTAG is not running, the MAC entity shall not perform any uplink transmission on any Serving Cell except the Random Access Preamble and MSGA transmission on the SpCell. |

The operations defined in Table 11 described above can be equally applied to the method proposed in this disclosure, except for sub-TAG (or multiple TAGs). Embodiment 1-1: Method for configuring/indicating/defining sub-TAG

In order to configure/indicate/define a sub-TAG, the sub-TAG can be configured/indicated/defined based on a predetermined index (or group/set of indices). As an example of the given index (or group/set of indices), the following can be applied.

For example, a sub TAG (or multiple TAGs) can be configured/indicated/defined based on a CORESET pool index (CORESETPoolIndex), a CORESET (or group/set of CORESETs), a search space (SS) set (or group/set of SS sets), a TCI state (group/set of TCI states), an SRI (or group/set of SRIs), SpatialRelationInfo (or group/set of Spatial-RelationInfos), a PL RS (or group/set of PL RSs), a BWP (or group/set of BWPs), and/or a newly defined index (e.g., sub-TAG-iD) to distinguish sub-TAGs. In other words, this information may be referred to as information for distinguishing sub TAGs (or multiple TAGs). In other words, different TAGs can be related to different CORESET pool indexes, CORESETs (or group/set of CORESETs), SS sets (or group/set of SS sets), TCI states (or group/set of TCI states), SRIs (or group/set of SRIs), SpatialRelationInfo (or group/set of SpatialRelationInfos), PL RSs (or group/set of PL RSs), BWPs (or group/set of BWPs), and/or newly defined indexes to distinguish sub-TAGs (e.g., sub-TAG-ID)), etc.

FIG. 10 is a diagram illustrating a plurality of TAGs according to an embodiment of the present disclosure.

FIG. 10(a) shows an example in which one or more serving cells (serving cell #0, serving cell #1, serving cell #2) (e.g., cell group) correspond to a single TAG (e.g., TAG #0) based on the current standard.

FIG. 10(b) shows an example in which two TAGs (e.g., TAG #0, TAG #1) are defined for one or more serving cells (serving cell #0, serving cell #1, serving cell #2) (e.g., cell group), based on the method proposed in this disclosure. Referring to FIG. 10(b), a TA value for TAG #0 may be applied for a scheduled/transmitted UL channel/RS (e.g. PUCCH, PUSCH, SRS, etc.) corresponding to/related to CORESET pool index 0 in serving cell #0, serving cell #1, and serving cell #2. In addition, a TA value for TAG #1 may be applied for a scheduled/transmitted UL channel/RS (e.g. PUCCH, PUSCH, SRS, etc.) corresponding to/related to CORESET pool index 1 in serving cell #0, serving cell #1, and serving cell #2.

The example in FIG. 10(b) shows an example of distinguishing TAGs based on a CORESET pool index (CORESETPoolIndex) of each serving cell, but this is only one example of the proposed method. In other words, TAGs can be distinguished based on the above-described CORESET full index, a CORESET (or group/set of CORESETs), an SS set (or group/set of SS sets), a TCI state (or group/set of TCI states), an SRI (or group/set of SRIs), SpatialRelationInfo (or group/set of SpatialRelationInfos), a PL RS (or group/set of PL RSs), a BWP (or group/set of BWPs), and/or a newly defined index (e.g., TAG-ID) for TAG identification, etc.

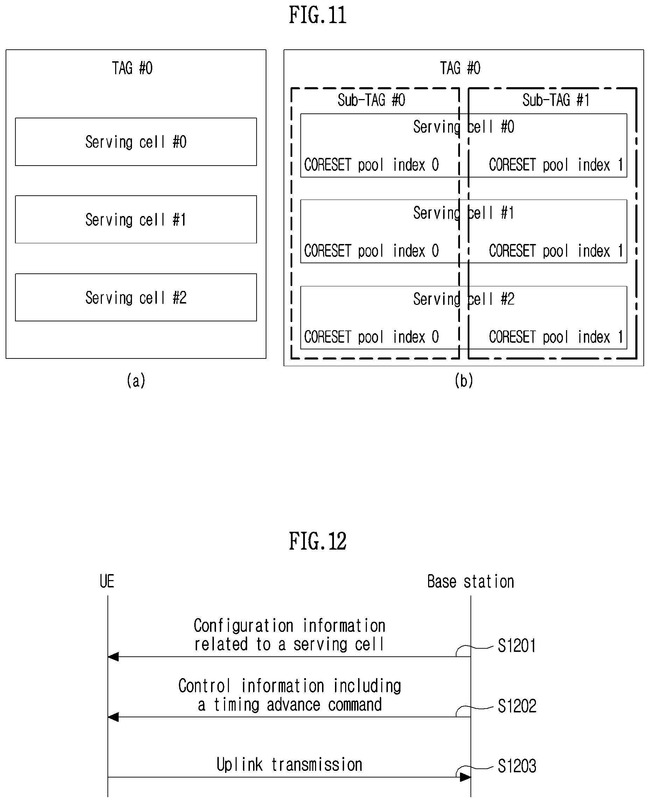

FIG. 11 is a diagram illustrating a sub-TAG according to an embodiment of the present disclosure.

FIG. 11(a) shows an example in which one or more serving cells (serving cell #0, serving cell #1, serving cell #2) (e.g., cell group) correspond to a single TAG (e.g., TAG #0) based on the current standard.

FIG. 11(b) shows an example in which two sub-TAGs (e.g., sub-TAG #0, sub-TAG #1) referencing a specific TAG (e.g., TAG #0) are defined for one or more serving cells (serving cell #0, serving cell #1, serving cell #2) (e.g., cell group), based on the method proposed in this disclosure. Referring to FIG. 10(b), a TA value for sub-TAG #0 may be applied for a scheduled/transmitted UL channel/RS (e.g. PUCCH, PUSCH, SRS, etc.) corresponding to/related to CORESET pool index 0 in serving cell #0, serving cell #1, and serving cell #2. In addition, a TA value for sub-TAG #1 may be applied for a scheduled/transmitted UL channel/RS (e.g. PUCCH, PUSCH, SRS, etc.) corresponding to/related to CORESET pool index 1 in serving cell #0, serving cell #1, and serving cell #2.

The example in FIG. 11(b) shows an example of distinguishing sub-TAGs in a TAG based on a CORESET pool index (CORESETPoolIndex) of each serving cell, but this is only one example of the proposed method. In other words, sub-TAGs in a TAG can be distinguished based on the above-described CORESET full index, a CORESET (or group/set of CORESETs), an SS set (or group/set of SS sets), a TCI state (or group/set of TCI states), an SRI (or group/set of SRIs), SpatialRelationInfo (or group/set of SpatialRelationInfos), a PL RS (or group/set of PL RSs), a BWP (or group/set of BWPs), and/or a newly defined index (e.g., TAG-ID) for TAG identification, etc.

For example, a TA corresponding to sub-TAG #0 (or #1) may be applied to a UL channel/RS (e.g., PUCCH/PUSCH/SRS, etc.) scheduled with CORESETPoolIndex 0 (or 1). Here, the correspondence relationship (i.e., in addition to the above-described information to distinguish sub-TAGs) between a sub-TAG and a specific CORESETPoolIndex may be configured/indicated/defined to a UE (in advance) based on L1/L2 signaling between a base station/UE.

In addition, for example, a TA corresponding to (sub-)TAG #0 (or #1) may be applied to a UL channel/RS (e.g., PUCCH/PUSCH/SRS, etc.) corresponding to a specific CORESET pool index, a specific CORESET (or group/set of CORESETs), a specific SS set (or group/set of SS sets), a specific TCI state (group/set of TCI states), a specific SRI (or group/set of SRIs), specific SpatialRelationInfo (or group/set of SpatialRelationInfos), a specific PL RS (or group/set of PL RSs), a specific BWP (or group/set of BWPs), and/or a newly defined index (e.g., (sub-)TAG-ID) to distinguish a specific (sub-)TAG, etc., based on a CORESET pool index, a CORESET (or group/set of CORESETs), an SS set (or group/set of SS sets), a TCI state (or group/set of TCI states), an SRI (or group/set of SRIs), SpatialRelationInfo (or group/set of SpatialRelationInfos), a PL RS (or group/set of PL RSs), a BWP (or group/set of BWPs), and/or a newly defined index (e.g., sub-TAG-ID) to distinguish sub-TAGs. For example, a TA corresponding to (sub-)TAG #0 (or #1) may be applied to a UL channel/RS (e.g., PUCCH/PUSCH/SRS, etc.) corresponding to SRI/SpatialRelationInfo/PL RS 1 (or 2), TCI state 1/2/3 (or 4/5/6). The correspondence relationship between the (sub-)TAG and a specific CORESET pool index, a specific CORESET (or group/set of CORESETs), a specific SS set (or group/set of SS sets), a specific TCI state (group/set of TCI states), a specific SRI (or group/set of SRIs), specific SpatialRelationInfo (or group/set of SpatialRelationInfos), a specific PL RS (or group/set of PL RSs), a specific BWP (or group/set of BWPs), and/or a newly defined index to distinguish a specific (Sub-)TAG (e.g., (sub-)TAG-ID), etc. can be configured/indicated/defined (in advance) based on L1/L2 signaling between a base stations and a UE.

For example, an index for distinguishing a (sub-)TAG is newly defined, and the index information may be configured/indicated (e.g., by L1/L2 signaling) together when configuring/scheduling a UL channel/RS (e.g., PUCCH/PUSCH/SRS, etc.). For example, a TA corresponding to (sub-)TAG #0 (or #1) may be applied to a UL channel/RS (e.g., PUCCH/PUSCH/SRS, etc.) corresponding to index 0 (or 1).

Meanwhile, with regard to some of the parameters proposed above, an independent parameter pool may be configured/indicated for each serving cell (e.g., CORESETPoolIndex, TCI state, Path loss Reference RS, etc.). In this case, a predetermined grouping method to distinguish the above parameters within a single TAG may be additionally applied to all serving cells corresponding to a specific TAG. For example, assume that serving cells 0 and 1 correspond to a single TAG, CORESETPoolIndex0 and 1 are configured for serving cell 0, and CORESETPoolIndex0 and 1 are configured for serving cell 1. In this case, group 0 may include CORESETPoolIndex0 (serving cell 0) and CORESETPoolIndex0 (serving cell 1), and group 1 may include CORESETPoolIndex1 (serving cell 0) and CORESETPoolIndex1 (serving cell 1) (and/or, group 0 may include CORESETPoolIndex0 (serving cell 0) and CORESETPoolIndex1 (serving cell 1), and group 1 may include CORESETPoolIndex1 (serving cell 0) and CORESETPoolIndex0 (serving cell 1)). In this way, two groups can be defined/configured/indicated. In other words, grouping for serving cell(s) is configured for specific parameter(s) within one TAG, and the specific parameter(s) may be configured individually for each group of serving cell(s).

Regarding some parameters of the above proposal, the proposed method may be applied based on the unified TCI framework introduced in Rel-17. For example, in Rel-17, it was decided to introduce the unified TCI framework (i.e.,

joint unified TCI framework) based on the same pool for DL and UL, or the unified TCI framework (i.e., separate unified TCI framework) based on different pools for DL and UL, based on a joint or separate method. Based on the Rel-17 operation, a pool of a TCI state corresponding to the joint unified TCI framework may be referred to as the joint TCI state pool, and a pool of a TCI state corresponding to the separate unified TCI framework may be referred to as the separate (DL/UL) TCI state pool. In this case, an index for sub-TAG definition/configuration/indication is defined/configured/indicated based on a TCI state (or group of TCI states) defined/configured/indicated in the joint TCI state pool and/or the separate (DL/UL) TCI state pool. In this case, grouping for each TCI state (or group of TCI states) may be configured/defined for each joint TCI state pool and/or separate (DL/UL) TCI state pool. For example, sub-TAG 0/1 may be distinguished for a TCI state in the separate DL TCI state pool, and sub-TAG 0/1 may be distinguished for a TCI state in the separate UL TCI state pool.

Embodiment 1-2: Method of configuring/indicating/defining different TA commands in sub-TAG and method of applying the TA command

A base station can configure/indicate/define a TA command for each sub-TAG (or group of sub-TAGs) to a UE. Here, a TA command may be transmitted through RRC/MAC CE/DCI, etc.

A sub-TAG (or group of sub-TAGs) and a TA command for the corresponding sub-TAG (or group of sub-TAGs) can be distinguished from each other based on information (e.g., index) for distinguishing sub-TAGs (or multiple TAGs) of the method proposed in Embodiment 1-1.

A TA command value configured/indicated for each sub-TAG (or group of sub-TAGs) may be configured/indicated/defined in the form of an offset based on a TA of a TAG including the sub-TAG (or group of sub-TAGs).

For example, in the current standard (TS 38.211, Section 4.3.1), a time difference between an uplink frame and a downlink frame is defined as Equation 3 below (see FIG. 7).

【Equation 3】

$$T_{TA} = (N_{TA} + N_{TA,offset})T_c$$

Here, $N_{TA}$ and $N_{TA,offset}$ can be configured for a UE according to the method described above.

According to the proposed method of the present disclosure, Equation 3 may be changed and defined as Equation 4 or Equation 5 below.

【Equation 4】

$$T_{TA} = (N_{TA} + N_{TA,offset} + N_{Sub-TAG,i})T_c$$

In Equation 4, $N_{Sub-TAG,i}$ may mean an offset TA value configured/indicated/defined for each sub-TAG (or group of sub-TAGs). Here, i may mean an index for distinguishing sub-TAGs proposed in Embodiment 1-1, and therefore $N_{Sub-TAG,i}$ may mean a offset TA value corresponding to the i-th sub-TAG.

According to Equation 4, $N_{TA}$ and $N_{TA,offset}$ values can be configured for each TAG. And, for a sub-TAG, $N_{Sub-TAG,i}$ configured for a sub-TAG may be applied to $N_{TA}$ and $N_{TA,offset}$ values configured for a TAG to which the sub-TAG belongs.

【Equation 5】

$$T_{TA} = (N_{Sub-TAG,i} + N_{TA,offset})T_c$$

In Equation 5, NSub-TAG,i may mean a TA value configured/indicated/defined for each sub-TAG (or group of sub-TAGs). Here, i may mean an index for distinguishing sub-TAGs proposed in Embodiment 1-1, and therefore $N_{Sub-TAG,i}$ may mean a TA value corresponding to the i-th sub-TAG.

According to Equation 5, a $N_{TA}$ value may not be configured for each TAG, and $N_{Sub-TAG,i}$ configured for each sub-TAG may be applied to the corresponding sub-TAG.

Together with Embodiment 1-2 above (or by substituting with Embodiment 1-2 above), a concept of a TAG pool (or sub-TAG pool) may be defined/introduced. In this case, a reference TAG and/or reference sub-TAG (e.g., TAG0 and/or sub-TAG0) may be defined within a TAG pool (or sub-TAG pool). For the remaining TAGs and/or sub-TAGs in the TAG pool (or sub-TAG pool) excluding the reference TAG and/or reference sub-TAG, $N_{TA}/N_{TA,offset}/N_{Sub-TAG,i}$ may be indicated/configured based on a differential (e.g., not 6 bits, number of bits less than 6 bits) value compared to the reference TAG and/or reference sub-TAG.

By applying the proposed method of this disclosure, the specification of standard TS 38.133 may be modified as follows.

7.1.2.1 Gradual timing adjustment

Requirements in this section shall apply regardless of whether the reference cell is on a carrier frequency subject to CCA or not.

When the transmission timing error between the UE and the reference timing exceeds $\pm T_e$ then the UE is required to adjust its timing to within $\pm T_e$. The reference timing shall be $(N_{TA}+N_{TA,offset}+N_{Sub-TAG,i}) \times T_c$ before the downlink timing of the reference cell.

All adjustments made to the UE uplink timing shall follow these rules:

1) The maximum amount of the magnitude of the timing change in one adjustment shall be $T_q$.

2) The minimum aggregate adjustment rate shall be $T_p$ per second.

3) The maximum aggregate adjustment rate shall be $T_q$ per 200 ms.

Here the maximum autonomous time adjustment step $T_q$ and the aggregate adjustment rate $T_p$ are specified in Table 12.

[Table 12]

| Frequency Range | SCS of uplink siqnals (kHz) | $T_q$ | $T_p$ |
|---|---|---|---|
| 1 | 15 | $5.5*64*T_c$ | $5.5*64*T_c$ |
| | 30 | $5.5*64*T_c$ | $5.5*64*T_c$ |
| | 60 | $5.5*64*T_c$ | $5.5*64*T_c$ |
| 2 | 60 | $2.5*64*T_c$ | $2.5*64*T_c$ |
| | 120 | $2.5*64*T_c$ | $2.5*64*T_c$ |
| Note: $T_c$ is the basic timing unit defined in TS 38.211. | | | |

In addition to Embodiment 1-2 (or by substituting with Embodiment 1-2), a method of indicating a TA value for a sub-TAG by expanding a range of $N_{TA,offset}$ may be used.

When configuring/indicating/defining a TA command for each sub-TAG (or group of sub-TAGs) based on Embodiment 1-2 above, a TA command can be configured/indicated/defined for each configured cell (or configured component carrier (CC) or serving cell) and/or configured cell (or configured CC or serving cell) group. When configuring/indicating/defining a TA command by the configured cell/configured CC/serving cell (or configured cell group/configured CC group/serving cell group), it can have the advantage that different TA commands are possible for different the configured cells/configured CCs/serving cells (or configured cell groups/configured CC groups/serving cell groups).

Regarding the proposed method of Embodiment 1/Embodiment 1-1/Embodiment 1-2, if there is no separate configuration/indication related to a sub-TAG (or related to multiple TAGs) within a single TAG, a UE/base station can perform a TA operation based on the TAG. On the other hand, if there are a separate configuration/indication related to a sub-TAG (or related to multiple TAGs), based on a (offset) TA value that can be configured/indicated/defined separately only for a corresponding sub-TAG (or a specific TAG among multiple TAGs), a UE/base station can perform a TA operation independent of the TAG. For example, it can be assumed that CORESETPoolindex0 performs a TA operation by referring to a TA value corresponding to a TAG, and that CORESETPoolindex1 corresponds to a sub-TAG (or sub-TAG 0 or sub-TAG 1, where the sub-TAG index corresponds to one example). A UE/base station can perform an independent TA operation by separately configuring/indicating/defining a (offset) TA value for the sub-TAG.

FIG. 12 illustrates a signaling method for an uplink transmission and reception method according to an embodiment of the present disclosure.

Fig. 12 illustrates signaling between a network (e.g., TRP 1, TRP 2) and a UE in a multiple TRP (i.e. M-TRP, or multi-cell, hereinafter all TRPs can be replaced by cells) situation to which the methods (e.g., any one or a combination of more than one in Embodiment 1, Embodiment 1-1, Embodiment 1-2, and detailed embodiments) proposed in the present disclosure can be applied. Here, a UE/Network may be an example and may be applied by being substituted with a variety of devices. FIG. 12 is only for convenience of description, but it is not intended to limit a scope of the present disclosure. In addition, some step(s) shown in FIG. 7 may be omitted according to a situation and/or a configuration, etc.

Referring to FIG. 12, signaling between one TRP and UE is illustrated for convenience of explanation, but the signaling method can be extended and applied to signaling between multiple TRPs and multiple UEs. In the following description, a network may be one base station including a plurality of TRPs or may be one cell including a plurality of TRPs. In an example, ideal/non-ideal backhaul may be configured between TRP 1 and TRP 2 included in a network. In addition, the following description is described based on a plurality of TRPs, but it may be also equivalently extended and applied to transmission through a plurality of panels. In addition, in the present disclosure, an operation in which a terminal receives a signal from TRP1/TRP2 may be interpreted/explained (or may be an operation) as an operation in which a terminal receives a signal from a network (via/using TRP1/2), and an operation in which a terminal transmits a signal to TRP1/TRP2 may be interpreted/explained (or may be an operation) as an operation in which a terminal transmits a signal to a network (via/using TRP1/TRP2), and vice versa.

Referring to FIG. 12, a UE receives configuration information related to a serving cell from a base station (S1201).

The configuration information may include information related to a multiple TRP configuration, a multiple TAG configuration for serving cells, and uplink transmission and reception described in the above-mentioned proposed method.

The configuration information may be information (e.g., CellGroupConfig, see Table 10) used to configure a cell group including one or more serving cells, or may be information used to configure MAC parameters for a cell group including one or more serving cells (e.g., MAC-CellGroupConfig, see Table 9).

Additionally, the configuration information may include information on correspondence relationships between each TAG in the plurality of TAGs and at least one of a CORESET, an SS set, a TCI state, an SRI, spatial relation information, a PL RS, a BWP, a TAG index.

Additionally, the configuration information may include information on a plurality of timing advance groups (TAG) associated with the serving cell (or a group of cells containing one or more serving cells) (e.g., TAG-Config).

For example, when a plurality of TAGs are configured in the serving cell (or a cell group including one or more serving cells), the information on the plurality of TAGs may correspond to a plurality of TAG-Configs. Alternatively, when one TAG is configured in the serving cell (or a cell group including one or more serving cells) and multiple sub-TAGs within the one TAG are configured, the information on the plurality of TAGs may correspond to information on a plurality of sub-TAGs within one TAG-Config.

A UE receives control information including a TA command for each TAG in a plurality of TAGs from a base station (S1202).

Here, control information may correspond to, for example, a random access response or a TA command MAC CE, but is not limited thereto. Additionally, as described above, a TA command may indicate the $N_{TA}$ value.

Here, control information (e.g., random access response or TA command MAC CE) may include a TA command for each TAG belonging to a plurality of TAGs, and a TA command for each TAG may individually indicate a TA value (e.g., $N_{TA}$ value) used to control uplink timing adjustment.

Here, for example, for each TAG, a TA command may indicate a differential value compared to a TA value used to control uplink timing adjustment for a reference TAG.

Alternatively, when the plurality of TAGs correspond to a plurality of sub-TAGs in a single TAG configured for the serving cell (or a cell group including one or more serving cells), a TA command may indicate an offset for each sub-TAG based on a TA value used to control uplink timing adjustment for the single TAG. Alternatively, a TA command may individually indicate a TA value (e.g., $N_{TA}$ value) used to control uplink timing adjustment for each sub-TAG.

A UE performs uplink transmission to a base station in a serving cell (S1203).

Here, uplink transmission may be transmitted at a transmission timing determined in consideration of a timing relation with a downlink frame previously described in FIG. 7.

For example, based on uplink transmission being associated with a specific TAG among a plurality of TAGs, a transmission timing of the uplink transmission may be determined based on a TA command for the specific TAG.

Here, for example, based on the correspondence relation according to at least one of a CORESET, an SS set, a TCI state, an SRI, spatial relation information, a PL RS, a BWP, and a TAG index related to the uplink transmission, the specific TAG related to the uplink transmission may be determined.

Alternatively, although not shown in FIG. 12, a UE may receive DCI scheduling the uplink transmission from a base station before the uplink transmission. In this case, the specific TAG related to the uplink transmission may be indicated by DCI.

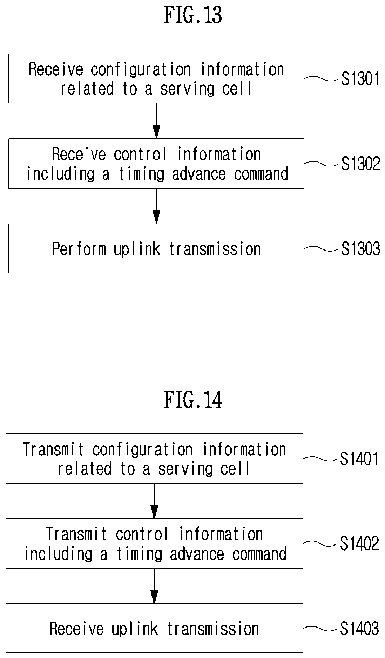

FIG. 13 is a diagram illustrating an operation of a UE for an uplink transmission and reception method according to an embodiment of the present disclosure.

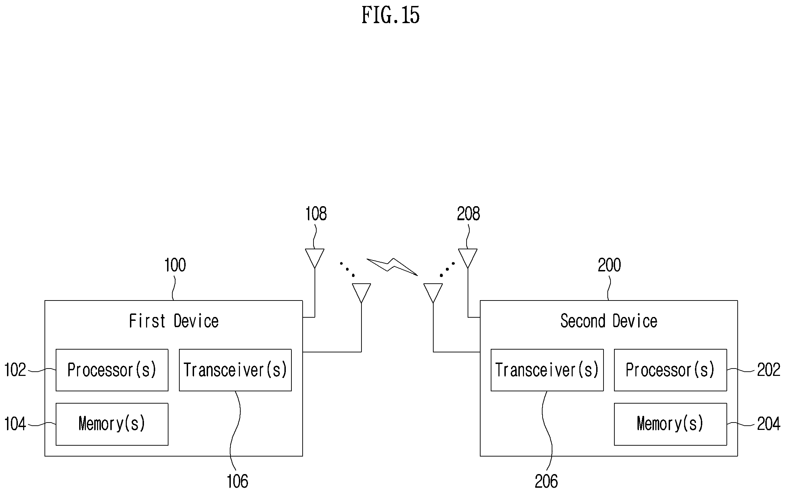

FIG. 13 exemplifies an operation of a UE based on the above-described proposed methods (e.g., any one or a combination of more than one in Embodiment 1, Embodiment 1-1, Embodiment 1-2, and detailed embodiments). FIG. 13 is only for convenience of description, but it is not intended to limit a scope of the present disclosure. Some step(s) shown in FIG. 13 may be omitted according to a situation and/or a configuration, etc. In addition, a UE in FIG. 13 is only one example, and may be implemented as a device illustrated in FIG. 15. For example, a processor (102/202) of FIG.

15 may control to transmit and receive channel/signal/data/information, etc. by using a transceiver (106/206), and control to store transmitted or received channel/signal/data/information in a memory (104/204).

Additionally, the operation of FIG. 13 may be processed by one or more processors 102, 202 of FIG. 15, the operation of FIG. 13 may be stored in memory (e.g., one or more memories 104, 204 of FIG. 15) in the form of instructions/programs (e.g. instruction, executable code) for driving at least one processor (e.g., 102, 202) of FIG. 15.

Referring to FIG. 13, a UE receives configuration information related to a serving cell from a base station (S1301).

The configuration information may include information related to a multiple TRP configuration, a multiple TAG configuration for serving cells, and uplink transmission and reception described in the above-mentioned proposed method.

The configuration information may be information (e.g., CellGroupConfig, see Table 10) used to configure a cell group including one or more serving cells, or may be information used to configure MAC parameters for a cell group including one or more serving cells (e.g., MAC-CellGroupConfig, see Table 9).

Additionally, the configuration information may include information on correspondence relationships between each TAG in the plurality of TAGs and at least one of a CORESET, an SS set, a TCI state, an SRI, spatial relation information, a PL RS, a BWP, a TAG index.

Additionally, the configuration information may include information on a plurality of timing advance groups (TAG) associated with the serving cell (or a group of cells containing one or more serving cells) (e.g., TAG-Config).

For example, when a plurality of TAGs are configured in the serving cell (or a cell group including one or more serving cells), the information on the plurality of TAGs may correspond to a plurality of TAG-Configs. Alternatively, when one TAG is configured in the serving cell (or a cell group including one or more serving cells) and multiple sub-TAGs within the one TAG are configured, the information on the plurality of TAGs may correspond to information on a plurality of sub-TAGs within one TAG-Config.

A UE receives control information including a TA command for each TAG in a plurality of TAGs from a base station (S1302).

Here, control information may correspond to, for example, a random access response or a TA command MAC CE, but is not limited thereto. Additionally, as described above, a TA command may indicate the $N_{TA}$ value.

Here, control information (e.g., random access response or TA command MAC CE) may include a TA command for each TAG belonging to a plurality of TAGs, and a TA command for each TAG may individually indicate a TA value (e.g., $N_{TA}$ value) used to control uplink timing adjustment.

Here, for example, for each TAG, a TA command may indicate a differential value compared to a TA value used to control uplink timing adjustment for a reference TAG.

Alternatively, when the plurality of TAGs correspond to a plurality of sub-TAGs in a single TAG configured for the serving cell (or a cell group including one or more serving cells), a TA command may indicate an offset for each sub-TAG based on a TA value used to control uplink timing adjustment for the single TAG. Alternatively, a TA command may individually indicate a TA value (e.g., $N_{TA}$ value) used to control uplink timing adjustment for each sub-TAG.

A UE performs uplink transmission to a base station in a serving cell (S1303).

Here, uplink transmission may be transmitted at a transmission timing determined in consideration of a timing relation with a downlink frame previously described in FIG. 7.

For example, based on uplink transmission being related to a specific TAG among a plurality of TAGs, transmission timing of the uplink transmission may be determined based on a TA command for the specific TAG.

Here, for example, based on the correspondence relation according to at least one of a CORESET, an SS set, a TCI state, an SRI, spatial relation information, a PL RS, a BWP, and a TAG index related to the uplink transmission, the specific TAG related to the uplink transmission may be determined.

Alternatively, although not shown in FIG. 12, a UE may receive DCI scheduling the uplink transmission from a base station before the uplink transmission. In this case, the specific TAG related to the uplink transmission may be indicated by DCI.

FIG. 14 is a diagram illustrating an operation of a base station for an uplink transmission and reception method according to an embodiment of the present disclosure.

FIG. 14 exemplifies an operation of a UE based on the above-described proposed methods (e.g., any one or a combination of more than one in Embodiment 1, Embodiment 1-1, Embodiment 1-2, and detailed embodiments). FIG. 14 is only for convenience of description, but it is not intended to limit a scope of the present disclosure. Some step(s) shown in FIG. 14 may be omitted according to a situation and/or a configuration, etc. In addition, a UE in FIG. 14 is only one example, and may be implemented as a device illustrated in FIG. 15. For example, a processor (102/202) of FIG. 15 may control to transmit and receive channel/signal/data/information, etc. by using a transceiver (106/206), and control to store transmitted or received channel/signal/data/information in a memory (104/204).

Additionally, the operation of FIG. 14 may be processed by one or more processors 102, 202 of FIG. 15, the operation of FIG. 14 may be stored in memory (e.g., one or more memories 104, 204 of FIG. 15) in the form of instructions/programs (e.g. instruction, executable code) for driving at least one processor (e.g., 102, 202) of FIG. 15.

Referring to FIG. 14, a base station transmits configuration information related to a serving cell to a UE (S1401).

The configuration information may include information related to a multiple TRP configuration, a multiple TAG configuration for serving cells, and uplink transmission and reception described in the above-mentioned proposed method.

The configuration information may be information (e.g., CellGroupConfig, see Table 10) used to configure a cell group including one or more serving cells, or may be information used to configure MAC parameters for a cell group including one or more serving cells (e.g., MAC-CellGroupConfig, see Table 9).

Additionally, the configuration information may include information on correspondence relationships between each TAG in the plurality of TAGs and at least one of a CORESET, an SS set, a TCI state, an SRI, spatial relation information, a PL RS, a BWP, a TAG index.

Additionally, the configuration information may include information on a plurality of timing advance groups (TAG) associated with the serving cell (or a group of cells containing one or more serving cells) (e.g., TAG-Config).

For example, when a plurality of TAGs are configured in the serving cell (or a cell group including one or more serving cells), the information on the plurality of TAGs may correspond to a plurality of TAG-Configs. Alternatively, when one TAG is configured in the serving cell (or a cell group including one or more serving cells) and multiple sub-TAGs within the one TAG are configured, the information on the plurality of TAGs may correspond to information on a plurality of sub-TAGs within one TAG-Config.

A base station transmits control information including a TA command for each TAG in a plurality of TAGs to a UE (S1402).

Here, control information may correspond to, for example, a random access response or a TA command MAC CE, but is not limited thereto. Additionally, as described above, a TA command may indicate the NTA value.

Here, control information (e.g., random access response or TA command MAC CE) may include a TA command for each TAG belonging to a plurality of TAGs, and a TA command for each TAG may individually indicate a TA value (e.g., $N_{TA}$ value) used to control uplink timing adjustment.

Here, for example, for each TAG, a TA command may indicate a differential value compared to a TA value used to control uplink timing adjustment for a reference TAG.

Alternatively, when the plurality of TAGs correspond to a plurality of sub-TAGs in a single TAG configured for the serving cell (or a cell group including one or more serving cells), a TA command may indicate an offset for each sub-TAG based on a TA value used to control uplink timing adjustment for the single TAG. Alternatively, a TA command may individually indicate a TA value (e.g., $N_{TA}$ value) used to control uplink timing adjustment for each sub-TAG.

A base station receives uplink transmission from a UE in a serving cell (S1403).

Here, uplink transmission may be transmitted at a transmission timing determined in consideration of a timing relation with a downlink frame previously described in FIG. 7.

For example, based on uplink transmission being related to a specific TAG among a plurality of TAGs, transmission timing of the uplink transmission may be determined based on a TA command for the specific TAG.

Here, for example, based on the correspondence relation according to at least one of a CORESET, an SS set, a TCI state, an SRI, spatial relation information, a PL RS, a BWP, and a TAG index related to the uplink transmission, the specific TAG related to the uplink transmission may be determined.

Alternatively, although not shown in FIG. 12, a UE may receive DCI scheduling the uplink transmission from a base station before the uplink transmission. In this case, the specific TAG related to the uplink transmission may be indicated by DCI.

General Device to which the Present Disclosure may be applied

FIG. 14 is a diagram which illustrates a block diagram of a wireless communication device according to an embodiment of the present disclosure.

In reference to FIG. 14, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machineexecutable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of performing uplink transmission in a wireless communication system, the method performed by a user equipment (UE) comprising:

   receiving, from the base station, configuration information related to a serving cell, wherein the configuration information includes information on a plurality of timing advance groups (TAGs) related to the serving cell;
   receiving, from the base station, control information including a timing advance (TA) command for each TAG in the plurality of TAGs; and
   performing, to the base station, the uplink transmission in the serving cell,
   wherein based on the uplink transmission being related to a specific TAG among the plurality of TAGs, transmission timing of the uplink transmission is determined based on a TA command for the specific TAG.

2. The method of claim 1, wherein a correspondence relationship between each TAG of the plurality of TAGs and at least one of a control resource set (CORESET), a search space set (SS set), a transmission configuration indication (TCI) state, a sounding reference signal (SRS) resource indicator (SRI), spatial relationship information, a pathloss reference signal (PL RS), a bandwidth part (BWP), a TAG index is configured for the UE.

3. The method of claim 2, wherein based on the correspondence relationship, the specific TAG related to the uplink transmission is determined according to at least one of a CORESET, an SS set, a TCI state, an SRI, spatial relation information, a PL RS, a BWP, and a TAG index related to the uplink transmission.

4. The method of claim 1, further comprising:

   receiving downlink control information (DCI) for scheduling the uplink transmission,
   wherein the specific TAG related to the uplink transmission is indicated by the DCI.

5. The method of claim 1, wherein the TA command indicates, for each TAG, a differential value compared to a TA value used to control uplink timing adjustment for a reference TAG.

6. The method of claim 1, wherein the plurality of TAGs correspond to a plurality of sub-TAGs in a single TAG configured for the serving cell.

7. The method of claim 6, wherein the TA command indicates an offset for each sub-TAG based on a TA value used to control uplink timing adjustment for the single TAG.

8. The method of claim 6, wherein the TA command indicates a TA value used to control uplink timing adjustment for each sub-TAG.

9. A user equipment (UE) of performing uplink transmission in a wireless communication system, the UE comprising:

   at least one transceiver for transmitting and receiving a wireless signal; and
   at least one processor for controlling the at least one transceiver,
   wherein the at least one processor configured to:

   receive, from the base station, configuration information related to a serving cell, wherein the configuration information includes information on a plurality of timing advance groups (TAGs) related to the serving cell;
   receive, from the base station, control information including a timing advance (TA) command for each TAG in the plurality of TAGs; and
   perform, to the base station, the uplink transmission in the serving cell,
   wherein based on the uplink transmission being related to a specific TAG among the plurality of TAGs, transmission timing of the uplink transmission is determined based on a TA command for the specific TAG.

10. At least one non-transitory computer-readable medium storing at least one instruction, wherein the at least one instruction executable by at least one processor controls a user equipment (UE) of performing uplink transmission to:

receive, from the base station, configuration information related to a serving cell, wherein the configuration information includes information on a plurality of timing advance groups (TAGs) related to the serving cell;
receive, from the base station, control information including a timing advance (TA) command for each TAG in the plurality of TAGs; and
perform, to the base station, the uplink transmission in the serving cell,
wherein based on the uplink transmission being related to a specific TAG among the plurality of TAGs, transmission timing of the uplink transmission is determined based on a TA command for the specific TAG.

11. A processing apparatus configured to control a user equipment (UE) of performing uplink transmission in a wireless communication system, the processing apparatus comprising:

at least one processor; and
at least one computer memory operably connected to the at least one processor and storing instructions that, based on being executed by the at least one processor, perform operations comprising:

receiving, from the base station, configuration information related to a serving cell, wherein the configuration information includes information on a plurality of timing advance groups (TAGs) related to the serving cell;
receiving, from the base station, control information including a timing advance (TA) command for each TAG in the plurality of TAGs; and
performing, to the base station, the uplink transmission in the serving cell,
wherein based on the uplink transmission being related to a specific TAG among the plurality of TAGs, transmission timing of the uplink transmission is determined based on a TA command for the specific TAG.

12. A method of receiving uplink transmission in a wireless communication system, the method performed by a base station comprising:

transmitting, to a user equipment (UE), configuration information related to a serving cell, wherein the configuration information includes information on a plurality of timing advance groups (TAGs) related to the serving cell;
transmitting, to the UE, control information including a timing advance (TA) command for each TAG in the plurality of TAGs; and
receiving, from the UE, the uplink transmission in the serving cell,
wherein based on the uplink transmission being related to a specific TAG among the plurality of TAGs, transmission timing of the uplink transmission is determined based on a TA command for the specific TAG.

13. A base station of receiving uplink transmission in a wireless communication system, the base station comprising:

at least one transceiver for transmitting and receiving a wireless signal; and
at least one processor for controlling the at least one transceiver,
wherein the at least one processor configured to:

transmit, to a user equipment (UE), configuration information related to a serving cell, wherein the configuration information includes information on a plurality of timing advance groups (TAGs) related to the serving cell;
transmit, to the UE, control information including a timing advance (TA) command for each TAG in the plurality of TAGs; and
receive, from the UE, the uplink transmission in the serving cell,
wherein based on the uplink transmission being related to a specific TAG among the plurality of TAGs, transmission timing of the uplink transmission is determined based on a TA command for the specific TAG.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, (k,$\bar{l}$)
- In a resource block,(k,l)

$k = 0$

$l = 0$

$l = 14 \cdot 2^{\mu} - 1$

# FIG.4

FIG.5

Resource grid

A carrier
(up to 3300 subcarriers,i.e.,275 RBs)

A BWP

1 RB=12 subcarrier

1 RE

1 subcarrier

1 Symbol

k=0

l=0 ·····

# FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

## FIG.7

| Downlink frame i |
| Uplink frame i |

$(N_{TA} + N_{TA,offset})T_C$

## FIG.8

| R | Timing advance command | | Oct 1 |
| Timing advance command | | UL grant | Oct 2 |
| UL grant | | | Oct 3 |
| UL grant | | | Oct 4 |
| UL grant | | | Oct 5 |
| Temporary C-RNTI | | | Oct 6 |
| Temporary C-RNTI | | | Oct 7 |

## FIG.9

| TAG ID | Timing advance command | Oct 1 |
|---|---|---|

## FIG.10

| TAG #0 |
|---|
| Serving cell #0 |
| Serving cell #1 |
| Serving cell #2 |

(a)

| TAG #0 | TAG #1 |
|---|---|
| Serving cell #0 CORESET pool index 0 | CORESET pool index 1 |
| Serving cell #1 CORESET pool index 0 | CORESET pool index 1 |
| Serving cell #2 CORESET pool index 0 | CORESET pool index 1 |

(b)

# FIG.11

| TAG #0 |
|---|
| Serving cell #0 |
| Serving cell #1 |
| Serving cell #2 |

(a)

| TAG #0 | |
|---|---|
| Sub-TAG #0 | Sub-TAG #1 |
| Serving cell #0 | |
| CORESET pool index 0 | CORESET pool index 1 |
| Serving cell #1 | |
| CORESET pool index 0 | CORESET pool index 1 |
| Serving cell #2 | |
| CORESET pool index 0 | CORESET pool index 1 |

(b)

# FIG.12

UE                                    Base station

Configuration information
related to a serving cell                    — S1201

Control information including
a timing advance command                     — S1202

Uplink transmission                          — S1203

## FIG.13

Receive configuration information related to a serving cell — S1301

Receive control information including a timing advance command — S1302

Perform uplink transmission — S1303

## FIG.14

Transmit configuration information related to a serving cell — S1401

Transmit control information including a timing advance command — S1402

Receive uplink transmission — S1403

EP 4 429 338 A1

# FIG.15

## INTERNATIONAL SEARCH REPORT

| International application No. |
|---|
| **PCT/KR2022/017217** |

### A. CLASSIFICATION OF SUBJECT MATTER

**H04W 56/00**(2009.01)i; **H04W 72/04**(2009.01)i

According to International Patent Classification (IPC) or to both national classification and IPC

### B. FIELDS SEARCHED

Minimum documentation searched (classification system followed by classification symbols)

H04W 56/00(2009.01); H04B 1/715(2011.01); H04W 52/14(2009.01); H04W 52/24(2009.01); H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 타이밍 어드밴스 그룹(timing advance group, TAG), 서빙 셀(serving cell), 타이밍 어드밴스(timing advance, TA), 명령(command), 상향링크(uplink), 제어 자원 세트(control resource set, CORESET)

### C. DOCUMENTS CONSIDERED TO BE RELEVANT

| Category* | Citation of document, with indication, where appropriate, of the relevant passages | Relevant to claim No. |
|---|---|---|
| X | KR 10-2020-0079487 A (QUALCOMM INCORPORATED) 03 July 2020 (2020-07-03)<br>See paragraphs [0019], [0074], [0082] and [0084]; and claims 1, 3, 8 and 21. | 1-13 |
| A | KR 10-2018-0125561 A (TELEFONAKTIEBOLAGET LM ERICSSON(PUBL)) 23 November 2018 (2018-11-23)<br>See paragraphs [0078]-[0202]. | 1-13 |
| A | US 2019-0037512 A1 (OFINNO TECHNOLOGIES, LLC) 31 January 2019 (2019-01-31)<br>See paragraphs [0225]-[0229]. | 1-13 |
| A | KR 10-2021-0125573 A (HUAWEI TECHNOLOGIES CO., LTD.) 18 October 2021 (2021-10-18)<br>See paragraphs [0163]-[0185]. | 1-13 |
| A | KR 10-2019-0064673 A (INTERDIGITAL PATENT HOLDINGS, INC.) 10 June 2019 (2019-06-10)<br>See claim 1. | 1-13 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 February 2023** | **23 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/017217**

| Patent document cited in search report | | | Publication date (day/month/year) | Patent family member(s) | | | Publication date (day/month/year) |
|---|---|---|---|---|---|---|---|
| KR | 10-2020-0079487 | A | 03 July 2020 | BR | 112020008786 | A2 | 13 October 2020 |
| | | | | CA | 3076825 | A1 | 09 May 2019 |
| | | | | CN | 111316720 | A | 19 June 2020 |
| | | | | CN | 111316720 | B | 29 March 2022 |
| | | | | EP | 3704908 | A1 | 09 September 2020 |
| | | | | JP | 2021-502020 | A | 21 January 2021 |
| | | | | TW | 201931906 | A | 01 August 2019 |
| | | | | US | 11540256 | B2 | 27 December 2022 |
| | | | | US | 2019-0141697 | A1 | 09 May 2019 |
| | | | | WO | 2019-089964 | A1 | 09 May 2019 |
| KR | 10-2018-0125561 | A | 23 November 2018 | EP | 3443804 | A1 | 20 February 2019 |
| | | | | EP | 3443804 | B1 | 15 June 2022 |
| | | | | JP | 2019-518360 | A | 27 June 2019 |
| | | | | JP | 6670396 | B2 | 18 March 2020 |
| | | | | US | 10887913 | B2 | 05 January 2021 |
| | | | | US | 2020-0245354 | A1 | 30 July 2020 |
| | | | | US | 2021-0120584 | A1 | 22 April 2021 |
| | | | | WO | 2017-178973 | A1 | 19 October 2017 |
| US | 2019-0037512 | A1 | 31 January 2019 | US | 10015757 | B2 | 03 July 2018 |
| | | | | US | 10750458 | B2 | 18 August 2020 |
| | | | | US | 2017-0078994 | A1 | 16 March 2017 |
| | | | | US | 2020-0374822 | A1 | 26 November 2020 |
| KR | 10-2021-0125573 | A | 18 October 2021 | CN | 111585732 | A | 25 August 2020 |
| | | | | CN | 111585732 | B | 25 February 2022 |
| | | | | EP | 3923501 | A1 | 15 December 2021 |
| | | | | US | 2021-0377892 | A1 | 02 December 2021 |
| | | | | WO | 2020-164514 | A1 | 20 August 2020 |
| KR | 10-2019-0064673 | A | 10 June 2019 | CN | 103931242 | A | 16 July 2014 |
| | | | | CN | 103931242 | B | 23 October 2018 |
| | | | | CN | 108834205 | A | 16 November 2018 |
| | | | | CN | 108834205 | B | 28 September 2021 |
| | | | | CN | 109327893 | A | 12 February 2019 |
| | | | | CN | 109327893 | B | 18 March 2022 |
| | | | | CN | 114245444 | A | 25 March 2022 |
| | | | | EP | 2774426 | A1 | 10 September 2014 |
| | | | | EP | 2774426 | B1 | 02 January 2019 |
| | | | | EP | 3525523 | A1 | 14 August 2019 |
| | | | | JP | 2014-535245 | A | 25 December 2014 |
| | | | | JP | 2016-027707 | A | 18 February 2016 |
| | | | | JP | 2017-200247 | A | 02 November 2017 |
| | | | | JP | 2020-048230 | A | 26 March 2020 |
| | | | | JP | 2022-031907 | A | 22 February 2022 |
| | | | | JP | 5793627 | B2 | 14 October 2015 |
| | | | | JP | 6194338 | B2 | 06 September 2017 |
| | | | | JP | 7150692 | B2 | 11 October 2022 |
| | | | | KR | 10-1986865 | B1 | 07 June 2019 |
| | | | | KR | 10-2014-0091733 | A | 22 July 2014 |
| | | | | TW | 201334431 | A | 16 August 2013 |
| | | | | TW | 201810966 | A | 16 March 2018 |
| | | | | TW | 201927033 | A | 01 July 2019 |

Form PCT/ISA/210 (patent family annex) (July 2022)

INTERNATIONAL SEARCH REPORT
Information on patent family members

International application No.

**PCT/KR2022/017217**

| Patent document cited in search report | Publication date (day/month/year) | Patent family member(s) | | Publication date (day/month/year) |
|---|---|---|---|---|
| | | TW | I596909 B | 21 August 2017 |
| | | TW | I670945 B | 01 September 2019 |
| | | TW | I703886 B | 01 September 2020 |
| | | US | 10098070 B2 | 09 October 2018 |
| | | US | 10869278 B2 | 15 December 2020 |
| | | US | 2013-0114505 A1 | 09 May 2013 |
| | | US | 2015-0043413 A1 | 12 February 2015 |
| | | US | 2017-0070960 A1 | 09 March 2017 |
| | | US | 2019-0110255 A1 | 11 April 2019 |
| | | US | 2021-0099960 A1 | 01 April 2021 |
| | | US | 8873443 B2 | 28 October 2014 |
| | | US | 9503989 B2 | 22 November 2016 |
| | | WO | 2013-067430 A1 | 10 May 2013 |

Form PCT/ISA/210 (patent family annex) (July 2022)